# FASCICULE DE BREVET EUROPEEN

(11) **EP 2 033 869 B1**
(45) Date de publication et mention de la délivrance du brevet: **16.06.2010**
(21) Numéro de dépôt: 08105200.3
(22) Date de dépôt: 02.09.2008
(51) Int. Cl.: B61D 17/18

(54) **Véhicule comportant une structure multifonctions de support d'équipements**
Fahrzeug ausgestattet mit einer Multifunktionsstruktur als Halterung für Ausrüstungsgegenstände
Vehicle comprising a multifunctional equipment support structure

(30) Priorité: 06.09.2007 FR 0706255
(43) Date de publication de la demande: 11.03.2009
(73) Titulaire: ALSTOM Transport SA, 92300 Levallois-Perret (FR)
(72) Inventeur: Pailler, Christophe, 17220, SALLES SUR MER (FR); Marqueteau, Eric, 17000, La ROCHELLE (FR)

(56) Documents cités:
- EP-A- 0 347 300
- EP-A- 0 684 172
- EP-A- 1 719 683
- WO-A-98/29277
- US-B1- 6 416 116

## Description

L'invention concerne un véhicule de transport de voyageurs dont la caisse présente un châssis ainsi que des parois latérales délimitant un espace voyageurs à l'intérieur de duquel sont agencés un plancher, des équipements ainsi qu'une structure multifonctions réalisée sous la forme d'un profilé s'étendant le long d'une paroi latérale, la structure multifonctions comprenant au moins un rail de fixation desdits équipements et étant fixée audit plancher.

Il est connu un véhicule, décrit dans la demande de brevet EP1719683, dans lequel une structure multifonctions, réalisée sous la forme d'un profilé, s'étend le long d'une paroi latérale. La structure multifonctions est fixée uniquement au plancher, ledit plancher étant monté de manière flottante à la caisse du véhicule et plus particulièrement au châssis du véhicule de manière à découpler son mouvement de celui de la caisse du véhicule.

Un plancher est dit monté de manière flottante à la caisse du véhicule, lorsque celui-ci est fixé à la caisse du véhicule au moyen de moyens d'attache absorbant les vibrations pouvant être transmises entre la caisse du véhicule et le plancher.

La structure multifonctions de support d'équipements comprend un premier rail de fixation d'équipements internes, du type sièges, ou cloisons.

La structure multifonctions comprend un second rail de fixation adapté pour la fixation des équipements du type panneaux d'habillage intérieur et conduits d'air de climatisation.

De manière à assurer un bon confort thermique aux passagers, il est important de souffler de l'air de climatisation, au moins en mode chauffage, en partie basse du véhicule au niveau du plancher. Or, dans un tel véhicule de l'art antérieur, le soufflage d'air en partie basse du véhicule le long des parois latérales n'est pas prévu.

Le document US-B1- 6 416 116 décrit un véhicule de transport conforme au préambule de la revendication 1.

Un tel soufflage nécessiterait la disposition, en partie basse du véhicule, d'un dispositif supplémentaire de soufflage d'air, ce qui serait encombrant et gênant pour les passagers.

Ainsi le but de l'invention est de remédier à l'inconvénient énoncé ci-dessus.

A cet effet, l'invention a pour objet un véhicule de transport de passagers dont la caisse présente un châssis et des parois latérales délimitant un espace passagers à l'intérieur duquel sont agencés un plancher, des équipements et une structure multifonctions de support desdits équipements réalisée sous la forme d'un profilé, ladite structure multifonctions étant fixée audit plancher et s'étendant longitudinalement le long d'au moins une face latérale, des moyens de distribution d'air étant répartis le long de ladite structure multifonctions et étant adaptés pour évacuer, en partie basse dudit espace voyageurs, de l'air provenant d'un réseau d'acheminent d'air de climatisation, **caractérisé en ce que** la structure multifonctions (5) est fixée uniquement audit plancher (3).

Les modes de réalisation de ce véhicule peuvent comporter une ou plusieurs des caractéristiques suivantes :
- ledit plancher est fixé de manière flottante audit châssis, lesdits équipements étant fixés uniquement à ladite structure multifonctions et audit plancher ;
- au moins un équipement du type siège est fixé à la structure multifonctions ;
- au moins un équipement parmi une table, une paroi transverse, une case à bagages, est fixé à la structure multifonctions ;
- la structure multifonctions comprend une base reposant sur le plancher ainsi qu'une paroi interne orientée vers l'espace voyageurs et une paroi externe orientée vers la paroi latérale, lesdites parois interne et externe s'étendant depuis la base dans la direction verticale, les parois internes étant reliées par des nervures constituant des entretoises ;
- la structure multifonctions comprend au moins un rail de fixation des équipements, le rail de fixation s'étendant longitudinalement le long de la structure multifonctions et comprenant une ouverture formée dans la paroi interne et s'étendant longitudinalement le long de la structure multifonctions de manière à fixer les équipements face à la paroi latérale ;
- les ouvertures sont disposées à une cote inférieure à la cote du rail de fixation ;
- le réseau d'acheminement d'air comprend des conduits acheminant l'air, depuis la partie haute du véhicule vers la partie basse, lesdits conduits débouchant sur un réseau de répartition de l'air le long de la paroi latérale ;
- les moyens de distribution d'air sont munis de moyens d'orientation du flux d'air évacué en partie basse de l'espace voyageurs ;
- la structure multifonctions comprend un canal adapté pour véhiculer des câbles électriques, le canal étant accessible depuis l'espace voyageurs ;
- la structure multifonctions comprend moyen de blocage du revêtement de sol ;
- la structure multifonctions comprend un couvercle adapté pour combler l'espace vertical entre l'habillage de face et la structure multifonctions ;
- le véhicule comprend une seconde structure multifonction similaire à la première et disposée le long de la seconde face latérale.

Ces modes de réalisation présentent en outre les avantages suivants :
- La distribution d'air en partie basse du véhicule, tout le long de la salle voyageurs, permet d'assurer un bon confort thermique aux passagers.
- L'intégration des fonctions de distribution d'air et de fixation des équipements dans la structure multifonctions permet d'intégrer plusieurs fonctions dans un espace restreint.
- Le montage indépendant de la structure multifonctions par rapport au plancher permet une fixation de la structure multifonctions sur le plancher lorsque celui-ci est déjà fixé à la face latérale et lorsque la face latérale est déjà équipée d'un moyen d'isolation. Il permet également d'adapter la position transversale de la structure multifonction à l'agencement de la salle voyageurs et à la taille du réseau d'acheminement et des moyens d'isolation.
- La fixation de la structure multifonctions à un plancher flottant permet d'assurer un bon confort acoustique et vibratoire aux passagers.
- L'utilisation d'une structure multifonctions monobloc pour assurer plusieurs fonctions permet de réduire les temps de montage et de réglages des équipements dans le véhicule.
- La disposition des moyens de distribution d'air à une hauteur inférieure de celle du rail de fixation permet d'assurer un soufflage sans obstacle susceptibles de perturber le soufflage et créer un zone d'inconfort
- La répartition des moyens de distribution d'air le long de la salle voyageurs permet d'éviter des courants d'air inconfortables pour les passagers.
- L'intégration d'un canal adapté pour véhiculer les câbles électriques dans la structure multifonctions permet d'assurer le cheminement des câbles électriques et pneumatiques de façon esthétique en garantissant une facilité d'accès pour les opérations de maintenance.
- L'intégration d'un moyen de blocage du revêtement de sol permet d'éviter l'obturation partielle des moyens de distribution de l'air par le revêtement de sol et de garantir l'étanchéité du montage dans le cas d'un revêtement de sol lavé à grande eau .

L'invention sera mieux comprise à la lecture de la description qui va suivre, donnée uniquement à titre d'exemple non limitatif et faite en se référant au dessin sur lequel :

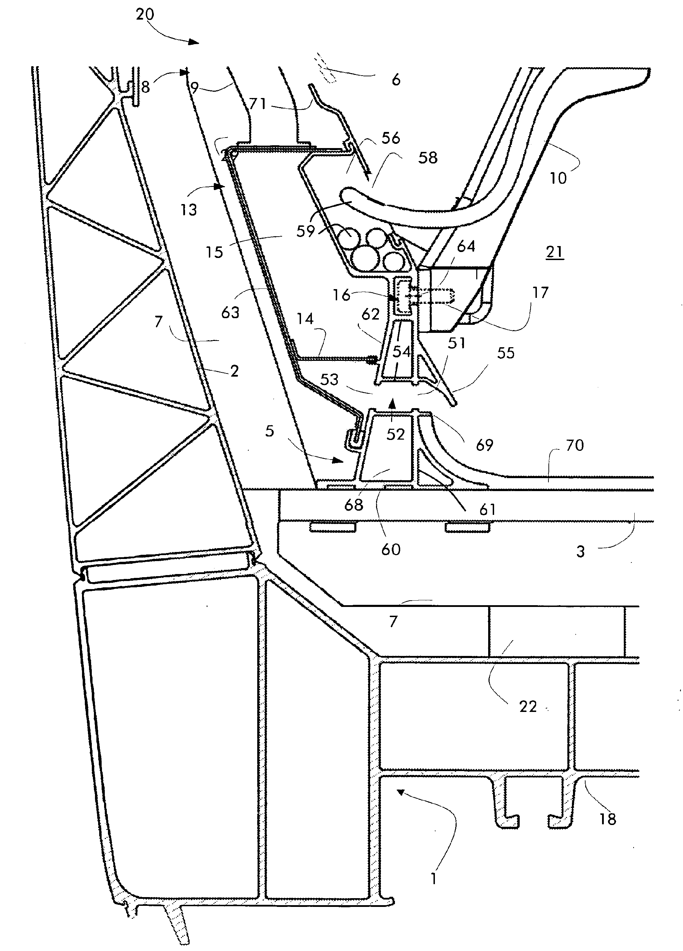

- La figure 1 est une représentation schématique d'une partie d'une coupe transversale d'un véhicule ferroviaire comportant un espace voyageurs délimité par un face latérale et un châssis, une structure multifonction disposée sur un plancher monté flottant par rapport au châssis du véhicule ferroviaire.

Comme visible sur la figure 1, une caisse 1 d'un véhicule ferroviaire 20 comporte un châssis 18 et une face latérale 2, délimitant un espace voyageur interne 21.

Le véhicule ferroviaire 20 comprend également une seconde face latérale reliée à la première par le châssis 18, cette seconde face latérale n'est pas représentée.

De façon connue en soi, un plancher 3 est fixé de manière flottante à la caisse 1, plus particulièrement au châssis 18, au moyen de moyens d'attache 22 absorbant les vibrations.

Plus précisément, un ensemble d'isolation 7 phonique et thermique fixé à la surface inférieure du plancher 3 est fixé au châssis 18 par l'intermédiaire de moyens d'attache souples 22. Les moyens d'attache 22 sont, par exemple, des plots anti-vibratiles en matériau résilient de type polyuréthane ou équivalent.

Une structure multifonctions 5 réalisée sous la forme d'un profilé est disposée sur le plancher 3 et s'étend à proximité d'une face latérale 2. La structure multifonctions 5 est fixée uniquement au plancher 3. La structure multifonctions 5 s'étend le long de ladite face latérale 2, dans la direction longitudinale du véhicule ferroviaire 20. Un ensemble d'isolation 7 phonique et thermique est accolé à la face latérale 2 et s'étend transversalement entre ladite paroi 2 et la structure multifonctions 5.

Une structure multifonctions 5 similaire, non représentée, est disposée à proximité de la seconde face latérale du véhicule.

Comme visible sur la figure 1, un équipement 10 est fixé à la structure multifonctions 5. Un équipement 10 est un équipement du type siège, table ou tablette, paroi transverse ou cloison, case à bagages, vestiaire, local pour agent de train.

L'équipement 10 est fixé uniquement à la structure multifonctions 5 et au plancher 3, de sorte que son mouvement est découplé de celui de la caisse du véhicule.

La structure multifonctions 5 étant fixée uniquement au plancher 3, la fixation dudit équipement 10 au plancher 3 et à la structure multifonctions 5 assure un découplage entre le mouvement de la caisse 2 et le mouvement dudit équipement 10. Cela permet de limiter les vibrations de la caisse 2 transmises vers l'équipement 10 et d'améliorer le confort acoustique au sein de l'espace voyageurs 21. De plus, lorsqu'on fixe un équipement 10 du type siège, le découplage entre le mouvement du siège et le mouvement de la caisse 2 assure un bon confort aux passagers qui ne ressentent pas les vibrations de la caisse 2.

La fixation d'un équipement 10 au plancher 3 est, par exemple, complétée par un pied de fixation, non représenté. Comme visible sur la figure 1, la structure multifonctions 5 comprend une base 60 reposant sur le plancher 3, une paroi interne 61 et une paroi externe 62. Les parois interne 61 et externe 62 s'étendent, depuis la base 60, dans la direction verticale. La paroi externe 62 est orientée vers la paroi latérale 2 et la paroi interne 61 est orientée vers l'espace voyageurs 21. Les parois interne 61 et externe 62 sont séparées par des nervures de jonction 54 constituant des entretoises.

Une ouverture 64 est formée dans la paroi interne 61. L'ouverture 64 s'étend longitudinalement sur toute la longueur de la structure multifonctions 5. Le canal 16 formé entre deux nervures de jonction 54 consécutives, la paroi externe 62 et la paroi interne 61 dans laquelle une ouverture 64 est formée, constitue un rail de fixation 16 en forme de C, s'étendant le long de la structure multifonctions 5. Le rail de fixation 16 est ouvert face à l'espace voyageurs 21.

Le rail de fixation 16 est adapté pour recevoir des moyens de fixation 17, dont un est représenté en traits pointillés sur la figure 1.

Les moyens de fixation 17, sont propres à pénétrer dans le rail de fixation 16 de manière à fixer les équipements 10 à la structure multifonctions 5.

De préférence, le rail 16 est formé à une hauteur suffisante par rapport au plancher pour ne pas pénaliser les opérations de nettoyage. En effet, dans le mode de réalisation représenté sur la figure 1, une première âme 68, formée entre les deux parois interne 61 et externe 62 ainsi que la base 60 et une première entretoise 54, sépare le rail 16 du plancher 3. La fixation des équipements 10 en hauteur contre la paroi latérale 2 permet de dégager un espace libre facilitant l'accès et le passage des appareils de nettoyage lors des opérations de maintenance et d'entretien du véhicule.

La position longitudinale d'un moyen de fixation 17 dans le rail de fixation 16 est choisie en fonction de la position que l'on souhaite attribuer aux équipements 10 dans la salle voyageurs 21.

Ce mode de réalisation présente l'avantage d'autoriser l'intégration d'un nombre variable d'équipements 10 dans la salle voyageur 21, lesdits équipements 10 étant agencés à des positions variables le long de la structure multifonctions 5. Ce mode de réalisation permet également un démontage rapide des ces équipements et/ou une reconfiguration rapide de la salle voyageur.

La structure multifonctions 5 est adapté pour distribuer de l'air de climatisation ou de chauffage en partie basse de la salle voyageurs au moyen de moyens de distribution 51. Des ouvertures formées dans le support 5 s'ouvrant vers la salle voyageurs 21 constituent les moyens de distribution 51. Les ouvertures 51 sont espacées longitudinalement le long de la paroi 2. L'air distribué par les ouvertures de distribution 51 est fourni par un réseau d'acheminement 8 d'air chaud ou froid produit par un groupe de climatisation non représenté.

Le réseau d'acheminement d'air 8 comprend plusieurs conduits 9 espacés longitudinalement et s'étendant verticalement le long de la paroi latérale 2 entre l'ensemble d'isolation 7 et un ensemble d'habillage de face 6.

Les conduits 9 sont adaptés pour véhiculer l'air produit par un groupe de climatisation, non représenté, de la partie haute du véhicule 20 vers la partie basse du véhicule 20 de manière à souffler de l'air en partie basse de l'espace voyageur 21.

Le réseau d'acheminement 8 de l'air en partie basse du véhicule comprend également un réseau de répartition 13 de l'air dans la direction longitudinale le long de la paroi latérale 2 du véhicule 20. Les conduits 9 débouchent, en partie basse du véhicule, sur le réseau de répartition 13.

Le réseau de répartition d'air 13 est adapté pour répartir, le long de la paroi latérale 2, l'air fourni par les conduits 9 de manière à ce que l'air soit distribué par les moyens de distribution 51 le long de l'espace voyageur 21.

Le réseau de répartition 13 permet de limiter les courants d'air dans le véhicule et d'améliorer le confort thermique des passagers.

Dans un autre mode de réalisation, le réseau d'acheminement comprend un unique conduit 9 débouchant sur un réseau de répartition 13.

Le réseau de répartition 13 d'air comprend un conduit 52, formé au sein de la structure multifonctions 5 et une goulotte 15 faisant saillie sur la face externe 62 de la structure multifonctions 5, vers à la face latérale 2.

La goulotte 15 est un espace fermé, formé entre une peau externe 63 s'étendant longitudinalement le long de la structure multifonctions 5 et la face externe 62 de la structure multifonctions 5.

La peau externe est avantageusement constituée d'un alliage métallique léger.

La goulotte 15 comprend des ouvertures 29, formées en partie supérieure de la peau externe 63, sur lesquelles débouchent les gaines 9. L'air fourni par les gaines 9 est apte à circuler dans de la goulotte 15, notamment le long de la structure multifonctions 5.

Avantageusement, la goulotte 15 est munie d'un moyen de répartition 14 de l'air dans la goulotte 15.

Le moyen de répartition 14 est constitué d'une plaque perforée s'étendant horizontalement à l'intérieur de la goulotte 15 sur toute la longueur et la largeur de la goulotte 15. La plaque 14 est fixée à la peau externe 63 et à la paroi externe 62.

La taille et la répartition des perforations formées dans cette plaque sont choisies de manière à adapter la vitesse et la répartition de l'air en sortie de la goulotte 15. Le moyen de répartition 14 est adapté pour affiner le débit du flux d'air qui est soufflé, en partie basse du véhicule, par les moyens d'évacuation 51.

L'air circulant dans la goulotte 15 s'écoule dans un conduit 52, formé au sein de la structure multifonctions 5, par l'intermédiaire d'ouvertures 53 formées dans la face externe 62 de la structure multifonctions 5. Les ouvertures 53 sont espacées longitudinalement et s'ouvrent vers la goulotte 15.

L'air est alors distribué en partie basse de la salle voyageurs 21 au moyen des moyens d'évacuation 51 constitués par des ouvertures 51 formées dans la paroi interne 61 et faisant face aux ouvertures 53.

Dans le mode de réalisation représenté sur la figure 1, la peau externe 63 est une peau en aluminium fixée par une bordure supérieure et une bordure inférieure à la peau externe 62 de la structure multifonctions 5.

La peau externe 63 peut être réalisée en tout autre alliage léger en matière plastique ou en composites.

Ce mode de réalisation présente l'avantage de limiter le poids de la structure multifonctions 5.

En variante, la peau 63 est comprise dans le profilé formant la structure multifonctions 5. Le réseau de répartition 13 d'air est alors compris en totalité dans la structure multifonctions 5.

Ce mode de réalisation présente l'avantage de faciliter la fabrication de la structure multifonctions 5 et du réseau de répartition 13, ces deux moyens étant constitués d'une seule pièce.

Ce mode de réalisation présente l'avantage de proposer un profilé de forme simple.

La distance séparant deux ouvertures 51 successives est, par exemple, constante de manière à distribuer uniformément, le long de la salle voyageurs, l'air du dispositif d'acheminement 8 d'air en partie basse de la salle voyageurs 21.

En variante, la distance séparant deux ouvertures 51 successives varie le long du profil multifonctions 5 de façon à moduler le débit d'air soufflé en partie basse du véhicule en fonction de la nature des espaces faisant face auxdites ouvertures 51.

Dans le mode de réalisation représenté sur la figure 1, les moyens de distribution 51 étant agencés en dessous du rail de fixation 16, la distribution de l'air de climatisation ou de chauffage, en partie basse du véhicule 20, n'est pas perturbée à l'emplacement des équipements 10.

Les équipements 10 étant fixés au dessus des moyens de distribution 51, l'air évacué par les ouvertures 51 n'est pas bloqué par ces équipements 10 et la distribution de l'air est homogène sur toute la longueur du véhicule 20.

Dans un autre mode de réalisation, les ouvertures 51 sont formées face à la goulotte 15 dans la partie de la face externe 62 formant le fond du rail de fixation 16.

Les ouvertures 51 sont munies de moyens d'orientation 55 du flux d'air soufflé par les moyens de distribution 51. Les moyens d'orientation 55 sont aptes à diriger le flux d'air, diffusé par les moyens de distribution 51, dans la direction voulue.

Sur le mode de réalisation représenté sur la figure 1, la structure multifonctions 5 comprend des ailettes 55 faisant saillie par rapport à la paroi interne 61 en direction de la salle voyageur.

Plus précisément, les ailettes 55 s'étendent depuis la partie haute des ouvertures 51 vers le plancher de façon inclinée par rapport à la paroi 61.

Les ailettes 55 sont ainsi aptes à diriger le flux d'air en direction du plancher 3, de manière à éviter le soufflage d'air en direction des chevilles des passagers et à ne pas générer un inconfort thermique au niveau des jambes des passagers.

Dans le mode de réalisation de la figure 1, un unique bord incliné formé dans la structure multifonctions 5 et s'étendant sur toute la longueur de ladite structure multifonctions 5 forme les ailettes 55.

Avantageusement, le profil 5 comprend un canal 56 adapté pour acheminer des câbles électriques et/ou pneumatiques 59 le long de la paroi 2. Le canal 56 comprend avantageusement une ouverture 58 s'étendant le long de la structure multifonctions 5 et formée dans la paroi interne 61.

Des couvercles 71 sont adaptés pour fermer les ouvertures 58. Les couvercles 71 sont aptes à être déplacés d'une position de fermeture de l'ouverture 58, non représenté sur la figure 1, vers une position d'ouverture comme représentée sur la figure 1. Lorsque un couvercle 71 est en position d'ouverture, l'accès au canal 56 depuis l'espace voyageurs est possible, ce qui permet de faciliter l'installation et la maintenance des câbles 59.

Avantageusement, l'ouverture 58 est laissée ouverte, en regard des équipements 10, de manière à faire cheminer les câbles 59 vers les équipements 10 afin d'alimenter électriquement et pneumatiquement des dispositifs électriques et pneumatiques équipant lesdits équipements.

Un équipement 10 du type siège est par exemple équipé de lampes, d'un dispositif d'inclinaison, d'un afficheur de place, d'un écran vidéo, d'un dispositif audio, d'une prise pour ordinateur et/ou d'un dispositif de massage.

Un rebord 69 sensiblement horizontal fait avantageusement saillie par rapport à la paroi interne 61 de la structure multifonction 5. Ce rebord 69 constitue un moyen de blocage du revêtement de sol 70.

De même, la partie supérieure du couvercle 71 s'étend au dessus de la partie supérieure de la face externe de manière à combler l'espace vertical qui pourrait se créer entre les panneaux d'habillage de face 6 et la paroi externe 62, laissant visibles les panneaux d'isolation 7 et le réseau de distribution d'air 8 depuis l'espace voyageurs. La partie supérieure du couvercle 71 permet d'éviter la création de tels espaces inesthétiques.

Les conduits 9 sont fixés à l'habillage de face 7 par des moyens de liaison souples non représentés, de manière à découpler le mouvement du conduit et le mouvement de la structure du véhicule. Ces moyens de liaison présentent l'avantage de ne pas transmettre les vibrations de la caisse par l'intermédiaire des conduits 9 qui sont solidaires de la structure multifonctions 5.

Dans un autre mode de réalisation, le canal 56 comporte des cloisons de adaptées pour séparer des câbles de classes distinctes.

En variante, plusieurs rails 16 de fixations d'équipements sont formés dans le profil de manière à fixer des équipements à différentes hauteurs par rapport au plancher.

Avantageusement, des ouvertures, non représentées, s'ouvrant vers la goulotte 15, sont formées au fond du canal 56. Ces ouvertures favorisent les opérations de nettoyage du réseau de répartition 13. En effet, il est possible de nettoyer ledit réseau de répartition 13 au moyen d'un aspirateur accédant au réseau de répartition par l'intermédiaire des ouvertures formées dans le canal 56.

## Revendications

1. Véhicule (20) de transport de passagers dont la caisse (1) présente un châssis (18) et des parois latérales (2) délimitant un espace passagers (21) à l'intérieur duquel sont agencés un plancher (3), des équipements (10) et une structure multifonctions (5) de fixation desdits équipements (10) réalisée sous la forme d'un profilé, ladite structure multifonctions (5) étant fixée audit plancher (3) et s'étendant longitudinalement le long d'au moins une face latérale (2), des moyens de distribution d'air (51) étant répartis le long de ladite structure multifonctions (5) et étant adaptés pour évacuer, en partie basse dudit espace voyageurs (21), de l'air provenant d'un réseau d'acheminent d'air (8) de climatisation,
**caractérisé en ce que** la structure multifonctions (5) est fixée uniquement audit plancher (3).

2. Véhicule (20) de transport de passagers selon la revendication 1, **caractérisé en ce que** ledit plancher (3) est fixé de manière flottante audit châssis (18), lesdits équipements (10) étant fixés uniquement à ladite structure multifonctions (5) et audit plancher (3).

3. Véhicule (20) de transport de passagers selon l'une quelconque des revendications précédentes, **caractérisé en ce qu'**au moins un équipement (10) du type siège est fixé à la structure multifonctions (5).

4. Véhicule (20) de transport de passagers selon l'une quelconque des revendications précédentes, **caractérisé en ce qu'**au moins un équipement (10) parmi une table, paroi transverse, case à bagages, est fixé à la structure multifonctions (5).

5. Véhicule de transport de passagers selon l'une quelconque des revendications précédentes, **caractérisé en ce que** la structure multifonctions (5) comprend une base (60) reposant sur le plancher (3) ainsi qu'une paroi interne (61) orientée vers l'espace voyageurs (21) et une paroi externe (62) orientée vers la paroi latérale (2), lesdites parois interne (61) et externe (62) s'étendant, depuis la base (60), dans la direction verticale, les parois internes étant reliées par des nervures (54) constituant des entretoises.

6. Véhicule de transport de passagers selon l'une quelconque des revendications précédentes, **caractérisé en ce que** la structure multifonctions (5) comprend au moins un rail de fixation (16) des équipements (10), le rail de fixation (10) s'étendant longitudinalement le long de la structure multifonctions (5) et comprenant une ouverture (64), formée dans la paroi interne (61) et s'étendant longitudinalement le long de la structure multifonctions (5) de manière à fixer les équipements (10) face à la paroi latérale (2)

7. Véhicule de transport de passagers selon la revendication 6, **caractérisé en ce que** les ouvertures (51) sont disposées à une cote inférieure à la cote du rail de fixation (17)

8. Véhicule de transport de passagers selon l'une quelconque des revendications précédentes, **caractérisé en ce que** le réseau d'acheminement d'air (8) comprend des conduits (9) acheminant l'air depuis la partie haute du véhicule vers la partie basse, lesdits conduits (9) débouchant sur un réseau de répartition (13) de l'air le long de la paroi latérale (2).

9. Véhicule de transport de passagers selon l'une quelconque des revendications précédentes, **caractérisé en ce que** les moyens de distribution d'air (51) sont munis de moyens d'orientation (55) du flux d'air évacué en partie basse de l'espace voyageurs (21).

10. Véhicule de transport de passagers selon l'une quelconque des revendications précédentes, **caractérisé en ce que** la structure multifonctions (5) comprend un canal (56) adapté pour véhiculer des câbles électriques (59), le canal (56) étant accessible depuis l'espace voyageurs (21) .

11. Véhicule de transport de passagers selon l'une quelconque des revendications précédentes, **caractérisé en ce que** la structure multifonctions (5) comprend moyen de blocage (69) du revêtement de sol (70).

12. Véhicule de transport de passagers selon l'une quelconque des revendications précédentes, **caractérisé en ce que** la structure multifonctions (5) comprend un couvercle (71) adapté pour combler l'espace vertical entre l'habillage de face (6) et la structure multifonctions (5).

13. Véhicule de transport de passagers selon l'une quelconque des revendications précédentes, **caractérisé en ce qu'**il comprend une seconde structure multifonction (5) similaire à la première et disposée le long de la seconde face latérale (2).

## Claims

1. Passenger transport vehicle (20) the body (1) of which has a chassis (18) and lateral walls (2) delimiting a passenger space (21) inside which there are a floor (3), equipment items (10) and a multifunctional structure (5) for attaching the said equipment items (10) which structure is produced in the form of a profiled section piece, the said multifunctional structure (5) being attached to the said floor (3) and running longitudinally along at least one lateral face (2), air distribution means (51) being spread along the said multifunctional structure (5) and being able to discharge, at the lower part of the said passenger space (21), air that has come from the air conditioning ducting network (8), **characterized in that** the multifunctional structure (5) is fixed only to the said floor (3).

2. Passenger transport vehicle (20) according to Claim 1, **characterized in that** the said floor (3) is fixed so that it is suspended in relation to the said chassis (18), the said equipment items (10) being fixed only to the said multifunctional structure (5) and to the said floor (3).

3. Passenger transport vehicle (20) according to either one of the preceding claims, **characterized in that** at least one equipment items (10) of the seat type is fixed to the multifunctional structure (5).

4. Passenger transport vehicle (20) according to any one of the preceding claims, **characterized in that** at least one equipment item (10) being either a table, a transverse wall, or a luggage rack, is fixed to the multifunctional structure (5).

5. Passenger transport vehicle according to any one of the preceding claims, **characterized in that** the multifunctional structure (5) comprises a base (60) resting on the floor (3) and an internal wall (61) oriented towards the passenger space (21) and an external wall (62) oriented towards the lateral wall (2), the said internal (61) and external (62) walls extending, from the base (60) in the vertical direction, the internal walls being connected by ribs (54) that constitute braces.

6. Passenger transport vehicle according to any one of the preceding claims, **characterized in that** the multifunctional structure (5) comprises at least one fixing rail (16) for fixing the equipment items (10), the fixing rail (10) running longitudinally along the multifunctional structure (5) and comprising an opening (64) formed in the internal wall (61) and running longitudinally along the multifunctional structure (5) so as to fix the equipment items (10) facing the lateral wall (2).

7. Passenger transport vehicle according to Claim 6, **characterized in that** the openings (51) are located at a lower level than the fixing rail (17).

8. Passenger transport according to any one of the preceding claims, **characterized in that** the air trunking network (8) comprises ducts (9) conveying the air from the upper part of the vehicle towards the lower part, the said ducts (9) opening onto an air distribution network (13) that distributes the air along the lateral wall (2).

9. Passenger transport vehicle according to any one of the preceding claims, **characterized in that** the air distribution means (51) are equipped with means (55) for directing the air flow discharged in the lower part of the passenger space (21).

10. Passenger transport vehicle according to any one of the preceding claims, **characterized in that** the multifunctional structure (5) comprises a conduit (56) designed to carry electrical cables (59), the conduit (56) being accessible from the passenger space (21).

11. Passenger transport vehicle according to any one of the preceding claims, **characterized in that** the multifunctional structure (5) comprises a means (69) of immobilizing the floor covering (70).

12. Passenger transport vehicle according to any one of the preceding claims, **characterized in that** the multifunctional structure (5) comprises a cover (71) designed to fill the vertical space between the facing trim (6) and the multifunctional structure (5).

13. Passenger transport vehicle according to any one of the preceding claims, **characterized in that** it comprises a second multifunctional structure (5) similar to the first and positioned along the second lateral face (2).

## Patentansprüche

1. Fahrgasttransportfahrzeug (20), dessen Aufbau (1) ein Chassis (18) und Seitenwände (2) aufweist, die einen Fahrgastraum (21) begrenzen, in dem ein Boden (3), Ausrüstungsgegenstände (10) und eine in Form eines Profils ausgeführte Multifunktionsstruktur (5) zur Befestigung der Ausrüstungsgegenstände (10) angeordnet sind, wobei die Multifunktionsstruktur (5) am Boden (3) befestigt ist und sich in Längsrichtung entlang mindestens einer Seitenfläche (2) erstreckt, wobei Luftverteilungsmittel (51) entlang der Multifunktionsstruktur (5) verteilt und dazu geeignet sind, im unteren Teil des Fahrgastraums (21) aus einem Klimatisierungsluft-Beförderungsnetz (8) kommende Luft abzugeben, **dadurch gekennzeichnet, dass** die Multifunktionsstruktur (5) nur am Boden (3) befestigt ist.

2. Fahrgasttransportfahrzeug (20) nach Anspruch 1, **dadurch gekennzeichnet, dass** der Boden (3) schwimmend am Chassis (18) befestigt ist, wobei die Ausrüstungsgegenstände (10) nur an der Multifunktionsstruktur (5) und am Boden (3) befestigt sind.

3. Fahrgasttransportfahrzeug (20) nach einem der vorhergehenden Ansprüche, **dadurch gekennzeichnet, dass** mindestens ein Ausrüstungsgegenstand (10) von der Art eines Sitzes an der Multifunktionsstruktur (5) befestigt ist.

4. Fahrgasttransportfahrzeug (20) nach einem der vorhergehenden Ansprüche, **dadurch gekennzeichnet, dass** mindestens ein Ausrüstungsgegenstand (10), bei dem es sich um einen Tisch, eine Querwand oder eine Gepäckablage handelt, an der Multifunktionsstruktur (5) befestigt ist.

5. Fahrgasttransportfahrzeug nach einem der vorhergehenden Ansprüche, **dadurch gekennzeichnet, dass** die Multifunktionsstruktur (5) eine auf dem Boden (3) ruhende Basis (60), eine zum Fahrgastraum (21) gerichtete Innenwand (61) und eine zur Seitenwand (2) gerichtete Außenwand (62) umfasst, wobei sich die Innenwand (61) und die Außenwand (62) von der Basis (60) in vertikaler Richtung erstrecken, wobei die Innenwände über Abstandshalter darstellende Rippen (54) verbunden sind.

6. Fahrgasttransportfahrzeug nach einem der vorhergehenden Ansprüche, **dadurch gekennzeichnet, dass** die Multifunktionsstruktur (5) mindestens eine Schiene (16) zur Befestigung der Ausrüstungsgegenstände (10) umfasst, wobei sich die Befestigungsschiene (10) in Längsrichtung entlang der Multifunktionsstruktur (5) erstreckt und eine Öffnung (64) umfasst, die in der Innenwand (61) ausgebildet ist und sich in Längsrichtung entlang der Multifunktionsstruktur (5) erstreckt, um die Ausrüstungsgegenstände (10) gegenüber der Seitenwand (2) zu befestigen.

7. Fahrgasttransportfahrzeug nach Anspruch 6, **dadurch gekennzeichnet, dass** die Öffnungen (51) auf einem im Vergleich zum Niveau der Befestigungsschiene (17) niedrigeren Niveau angeordnet sind.

8. Fahrgasttransportfahrzeug nach einem der vorhergehenden Ansprüche, **dadurch gekennzeichnet, dass** das Klimatisierungsluft-Beförderungsnetz (8) Leitungen (9) umfasst, die die Luft vom oberen Teil des Fahrzeugs in den unteren Teil befördern und in ein Netz (13) zur Verteilung der Luft entlang der Seitenwand (2) münden.

9. Fahrgasttransportfahrzeug nach einem der vorhergehenden Ansprüche, **dadurch gekennzeichnet, dass** die Luftverteilungsmittel (51) mit Mitteln (55) zur Ausrichtung des im unteren Teil des Fahrgastraums (21) abgegebenen Luftstroms versehen sind.

10. Fahrgasttransportfahrzeug nach einem der vorhergehenden Ansprüche, **dadurch gekennzeichnet, dass** die Multifunktionsstruktur (5) einen Kanal (56) umfasst, der geeignet ist, elektrische Kabel (59) zu führen, und der vom Fahrgastraum (21) aus zugänglich ist.

11. Fahrgasttransportfahrzeug nach einem der vorhergehenden Ansprüche, **dadurch gekennzeichnet, dass** die Multifunktionsstruktur (5) ein Mittel (69) zum Festlegen des Bodenbelags (70) umfasst.

12. Fahrgasttransportfahrzeug nach einem der vorhergehenden Ansprüche, **dadurch gekennzeichnet, dass** die Multifunktionsstruktur (5) eine Abdeckung (71) umfasst, die geeignet ist, den vertikalen Raum zwischen der Oberflächenverkleidung (6) und der Multifunktionsstruktur (5) zu schließen.

13. Fahrgasttransportfahrzeug nach einem der vorhergehenden Ansprüche, **dadurch gekennzeichnet, dass** es eine zweite Multifunktionsstruktur (5) umfasst, die der ersten ähnlich ist und entlang der zweiten Seitenfläche (2) angeordnet ist.
